# EUROPEAN PATENT APPLICATION

(11) **EP 2 633 975 A1**
(43) Date of publication of application: **04.09.2013**
(21) Application number: 12188791.3
(22) Date of filing: 17.10.2012
(51) Int. Cl.: B29C 47/00, B29C 47/06, B29C 47/14, B29C 47/86

(54) **Method of producing co-extruded elements and the produced elements**

(30) Priority: 28.02.2012 IT MI20120306
(71) Applicant: Bextec S.r.l., 20025 Legnano (MI) (IT)
(72) Inventor: Bongiorno, Alessandro, 20025 LEGNANO (MILANO) (IT)
(74) Representative: Ponzellini, Gianmarco

(57) **Abstract**

A method is disclosed for producing co-extruded profiled elements (1), such as panels, bars, sheets, battens or tubular elements of a desired length, composed of a core (2) made of a heterogeneous mixture of a recycled plastic material (that is, deriving from recycling process of post-use plastics, known as R-POMIX, see UNI 10667-16 standard) and of a cladding (3) made of a WPC composite material. The method comprises steps of: extruding, through a first extruder (11), a first flow of a heterogeneous mixture of recycled plastic material; extruding, through a second extruder (12), a second flow of WPC composite material; and coupling the first and the second flow in a coextrusion die (13). The base plastic material is selected from a group comprising polypropylene, polyethylene, poly vinyl chloride, and the wood-cellulose fibres constitute a fraction of the WPC comprised between 10% and 70%; the heterogeneous plastic material comprises PP at between 10% and 40%, PE between 10% and 40%, and about 15% of other polymeric material. The method comprises a step of realising shapings out of the coupling plane in order to increase the coupling surface between the core (2) and the cladding (3) and/or localised heating of the second extruded flow of the WPC composite material upstream of the coextrusion die (13) and on a first side of the second flow in order to determine a migration of wood-cellulose fibres towards a second side of the second flow, destined to constitute the external surface of the profiled element, and to determine an increase in the concentration of the base plastic material at the first side.

## Description

The present invention relates to a co-extruded profiled element and a method for producing the profiled element. In more detail, in its general features the invention relates to a profiled element comprising a core (or internal nucleus) made of a heterogeneous plastic material obtained from recycling processes of used objects (known as R-POMIX) and an external cladding made of a composite material based on wood corpuscular elements within a plastic matrix, and further relates to a method for realising a profiled element having these characteristics by means of co-extrusion of the core and a cladding forming the profiled element.

In the present invention, the term "profiled element" relates in general to a product, a manufactured item or a semi-finished piece, typically in the form of a panel, bar, slab, beam, sheet, plate, plank or tubular element of a desired length - made with a technological extrusion or lamination process. The profiled elements can be realised in different materials and have a geometry and a section that are variable; typically, the structure of the profiled element has a full, hollow or cellular section, i.e. provided with a plurality of longitudinal internal cavities.

The prior art includes products realised by extrusion and exhibiting a plastic core and a cladding made of a material, or mixture, known as WPC, or Wood-Plastic Composite, i.e. a material made of a mixtures of a matrix having a prevalently polymeric nature, such as polypropylene (PP) or polyethylene (PE), with a suspension of granular or powder elements originating from wood and/or cellulose, such as shavings, wood-working waste, small particles etc. These material are used prevalently for realising claddings for gangways, walkways, verandas, terraces and so on, and in general for structures subjected to the environmental elements and external agents which, if realised in more precious materials, such as wood, would require frequent and expensive interventions for maintenance or replacement.

The advantage of the use of these products lies in the combination of low-quality plastics, typically recycled plastics, used for realising the core of a WPC cladding able to give good surface-finishing features, both aesthetic and structural, and give a better appeal to the finished product, which is therefore, in general terms, of good quality.

The applicant has however observed that the present co-extruded profiled elements, and still more the known methods for realisation thereof, are not without drawbacks and are improvable in various ways.

In greater detail, the applicant has found that for realising the above-mentioned core the known methods (for example described in the prior art) use a plastic material having a homogeneous and known content: consequently, the known profiled elements do not have a core made of a homogeneous plastic material (for example a virgin plastic, or if recycled plastic, a homogeneous composition plastic).

The applicant has also observed that in the known methods the step of co-extrusion of the core made of homogeneous material and the WPC cladding exhibits problems of adhesion due to the different chemical composition of the core and cladding, and in particular the wood or cellulose component which might not achieve a correct grip on the underlying plastic material, preventing the cladding from fusing solidly with the core. This can lead locally to the formation of cracks, fractures, cracks, air bubbles and/or detached portions which have a negative effect on the finished product and compromise use thereof as they can lead, in use, to an unsticking of the higher-quality outer layer and even breakage.

In this situation, in particular in the light of the above-illustrated drawbacks, the aim underlying the base of the present invention, in its various aspects and/or embodiments, is to disclose a method for producing co-extruded profiled elements and the profiled elements obtained by the method which are able to obviate one or more of the cited drawbacks.

An aim of the present invention is to disclose a method for producing coextruded profiled elements able to guarantee an excellent and uniform cohesion between the core and the cladding. It is further an aim of the invention to provide coextruded profiled elements which are relatively inexpensive, have a good aesthetic effect and exhibit characteristics of durability and resistance to dynamic and atmospheric agents.

The aim, and others besides, which will better emerge during the course of the following description, is substantially attained by a method for producing co-extruded profiled elements, and by elements obtained using the method, according to one or more of the accompanying claims, each of which can be taken singly (without the relative dependent claims) or in any combination with the other claims, as well as according to the following aspects and/or embodiments, variously combined, also with claims.

In an independent aspect of the invention, the invention relates to a method for producing co-extruded profiled elements (1), such as panels, bars, sheets, battens or tubular elements of a desired length, composed of a core (2) made of a heterogeneous mixture of a plastic material and a cladding (3) made of a WPC composite material constituted by a mixture of base plastic material and wood-cellulose fibres, the method comprising steps of: predisposing respective quantities of heterogeneous plastic material, in particular deriving from recycling processes of post-use plastics, a base plastic material and wood-cellulose fibres; predisposing a first (11) and a second extruder (12), distinct from one another, and a co-extrusion die (13); introducing the heterogeneous plastic material into the first extruder (11) and extruding a first flow of the heterogeneous mixture of plastic material; introducing the base plastic material into the second extruder (12) and the wood-cellulose fibres and extruding a second flow of the WPC composite material; feeding the first and second flow into the coextrusion die (13) such as to solidly couple the first and second flows and to realise the coextruded profiled element (1), the first and second flow constituting respectively the core (2) and the cladding (3) of the element, wherein the base plastic material is selected from a group comprising polypropylene, high-density polyethylene, low-density polyethylene, poly vinyl chloride, and the wood-cellulose fibres constitute a mass fraction of the WPC composite comprised between 10% and 70%, wherein the heterogeneous plastic material comprises a mass fraction of polypropylene comprised between 10% and 40%, a mass fraction of high-density polyethylene comprised between 10% and 40%, a mass fraction of low-density polyethylene comprised between 10% and 40% and a mass fraction of about 15% constituted of another polymer material, and wherein the step of predisposing the heterogeneous plastic material comprises a step of adding a quantity of additive plastic material to the heterogeneous plastic material, the additive plastic material being of a same type as the base plastic material and being a fraction comprised between 5% and 40% of the total mass of the heterogeneous plastic material, the method further comprising, alternatively or in combination, the following essential steps: wherein during the step of coupling the first and second flow in the coextrusion die for realising the coextruded profiled element, shapings which are out of the coupling plane are realised, for increasing the coupling surface between the core (2) and the cladding (3); heating, by means of a heating organ (14), the second extruded flow of the WPC composite material at a point, preferably immediately upstream of the coextrusion die (13), and of a first side of the second flow destined to enter into contact, and to couple, with the core of the element, in such a way as to determine a migration of a fraction of wood-cellulose fibre towards a second side of the second flow, opposite the first side and destined to constituted the external surface of the profiled element, and such as to determine an increase in a concentration of the base plastic material at the first side.

In a further independent aspect, the invention relates to a coextruded profiled element (1), such as a panel, bar, sheet, batten or tubular element of a desired length, comprising: a core (2) made of a heterogeneous mixture of plastic material, in particular deriving from recuperation processes of post-use plastic materials: a cladding (3) made of a WPC composite material constituted by a mixture of a base plastic material and wood-cellulose fibres, in which the cladding is solidly joined to the core by means of a coextrusion operation, in such a way that the cladding at least partially externally covers the core, wherein the base plastic material is selected from a group comprising polypropylene, high-density polyethylene, low-density polyethylene, poly vinyl chloride, and the wood-cellulose fibres constitute a mass fraction of the WPC composite comprised between 10% and 70%, wherein the heterogeneous plastic material comprises a mass fraction of polypropylene comprised between 10% and 40%, a mass fraction of high-density polyethylene comprised between 10% and 40%, a mass fraction of low-density polyethylene comprised between 10% and 40% and a mass fraction of about 15% constituted by another polymer material, and wherein the heterogeneous material made of plastic material further comprises an additional quantity of a single additive plastic material of a same type as the base plastic material and being a fraction comprised between 5% and 30% of the total mass of the heterogeneous plastic material and wherein, alternatively or in combination, it is essential that: a first side (3a) of the cladding, in contact and coupled with the core (2) of the profiled element, has a concentration of wood-cellulose fibres that is smaller than the concentration of base plastic material and wherein a second side (3b) of the cladding, opposite the first side and destined to constitute an external surface (4) of the profiled element, has a concentration of wood-cellulose fibres that is greater than the concentration of base plastic material; and a first side (3a) of the cladding, in contact and coupled with the core (2) of the profiled element, comprises a predetermined number of shapings out of the coupling plane in order to increase the coupling surface between the core (2) and the cladding (3).

An aspect of the invention relates to a use of a coextruded profiled element according to one or more of the claims, for realising claddings, floorings for internal and external use, civil and industrial shutters, track beams, claddings for inside and outside ambients, fencing, outside furnishings.

A further aspect of the invention relates to a co-extrusion plane comprising a first and a second extruder, both connected in outlet with a same coextrusion line, the plant being configured such as to actuate a method according to one or more of the claims and/or for realising a profiled element according to one or more of the claims. The plant preferably further comprises a heating organ configured such as to heat at least one of the flows of extruded material exiting from the two extruders on at least one of the sides thereof. The heating organ is preferably configured such as to heat an internal side of the flow destined to constitute the WPC layer and destined to enter into contact with the other flow (heterogeneous material); in this way the fluid lines close to the resistance, where there is an increase in flow by effect of the temperature, exhibit a reduction of short fibres in them, which might occur more in fluids having lower energy, being slower.

Further, the coextrusion line includes, in the realisation thereof, special workings of the conveyor channels such as to realise an increased adhesion surface between the two materials (core and cladding) with the aim of improving the coextrusion; refer to the accompanying figures.

In an aspect according to the claims a method is comprised in which during the step of coupling the first and second flow in the coextrusion die for realising the coextruded profiled element, shapings which are out of the coupling plane are realised, for increasing the coupling surface between the core (2) and the cladding (3).

In a further aspect according to the preceding aspect, a method is comprised in which the sub-step of realising shapings out of the coupling plane comprises realising at least an undercut, and in particular a plurality of undercuts, between the core and the cladding in order to increase the adhesion surface.

In a further aspect according to the two preceding aspects, a method is comprised in which the sub-step of realising shapings out of the coupling plane comprises realising at least a portion having a section comprising a dovetail shaping (7) and preferably a plurality of dovetail shapings that are parallel to one another such as to increase the adhering surface between the core and the cladding.

In a further aspect according to any one of the preceding aspects, the method comprises a step of localised heating, by means of a heating organ (14), of the second extruded flow of the WPC composite material at a point, preferably immediately upstream of the coextrusion die (13), and of a first side of the second flow destined to enter into contact, and to couple, with the core of the element, in such a way as to determine a migration of a fraction of wood-cellulose fibre towards a second side of the second flow, opposite the first side and destined to constitute the external surface of the profiled element, and such as to determine an increase in a concentration of the base plastic material at the first side.

In a further aspect according to any one of the preceding aspects, the method further comprises, downstream of the step of directing the first and second flows into the coextruding wire such as to solidly couple them, a step of drawing the coextruded profiled element by means of wires or flat heads in order to obtain a section of flat, undulated, corrugated, cellular or full profile.

In a further aspect according to the preceding aspects, a profiled element (1) is provided in which a first side (3a) of the cladding, in contact and coupled with the core (2) of the profiled element, has a concentration of wood-cellulose fibres that is smaller than the concentration of base plastic material and wherein a second side (3b) of the cladding, opposite the first side and destined to constitute an external surface (4) of the profiled element, has a concentration of wood-cellulose fibres that is greater than the concentration of base plastic material.

In a further aspect according to the preceding aspects, a profiled element is provided in which a first of the cladding, in contact and coupled with the core of the profiled element, comprises a predetermined number of shapings out of the coupling plane in order to increase the coupling surface between the core and the cladding, in particular the shapings out of the coupling plane comprise at least an undercut, and in particular a plurality of undercuts, between the core and the cladding and still more in particular the shapings out of the coupling plane comprise at least a portion of section having a dovetail shaping and preferably a plurality of dovetail shapings that are parallel to one another.

In a further aspect according to any one of the preceding aspects, a profiled element is provided in which in the first side of the cladding, in contact and coupled to the core of the profiled element, the relation between the surface occupied by the plastic base material and a total interface surface between the cladding and the core is greater than 0.6, preferably greater than 0.8, still more preferably about 1, such as to facilitate a homogeneous adhesion between the cladding and the core.

In a further aspect according to any one of the preceding aspects a profiled element (1) is comprised having a full, hollow or cellular section.

In a further aspect according to any one of the preceding aspects a profiled element (1) is obtained using a method according to any one of the aspects relating to the profiled element.

Further characteristics and advantages will more fully emerge from the detailed description of some embodiments, among which also a preferred embodiment, which are provided by way of non-exclusive example, of a method for producing coextruded profiled elements and a profiled element, obtained by means of a production plant implementing the method according to the present invention. This description will be set out in the following with reference to the accompanying drawing, supplied by way of non-limiting example, in which:
figure 1 is a perspective view of a possible embodiment of a coextruded profiled element according to the present invention;
figure 2 is a transversal section of the coextruded profiled element of figure 1;
figure 3 is a schematic view of a plant for producing coextruded profiled elements which implements a possible embodiment of a method for producing coextruded profiled elements with the present invention;
figure 3a is a detail of a die provided with microheating and dovetail working capabilities;

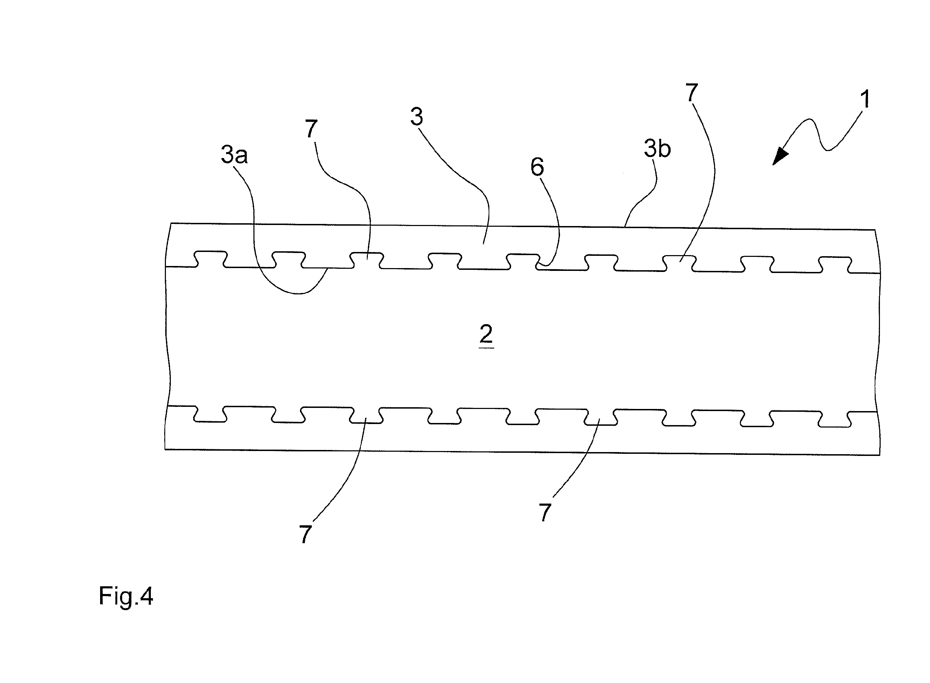

figure 4 illustrates a variant of the profiled element of figure 2; and

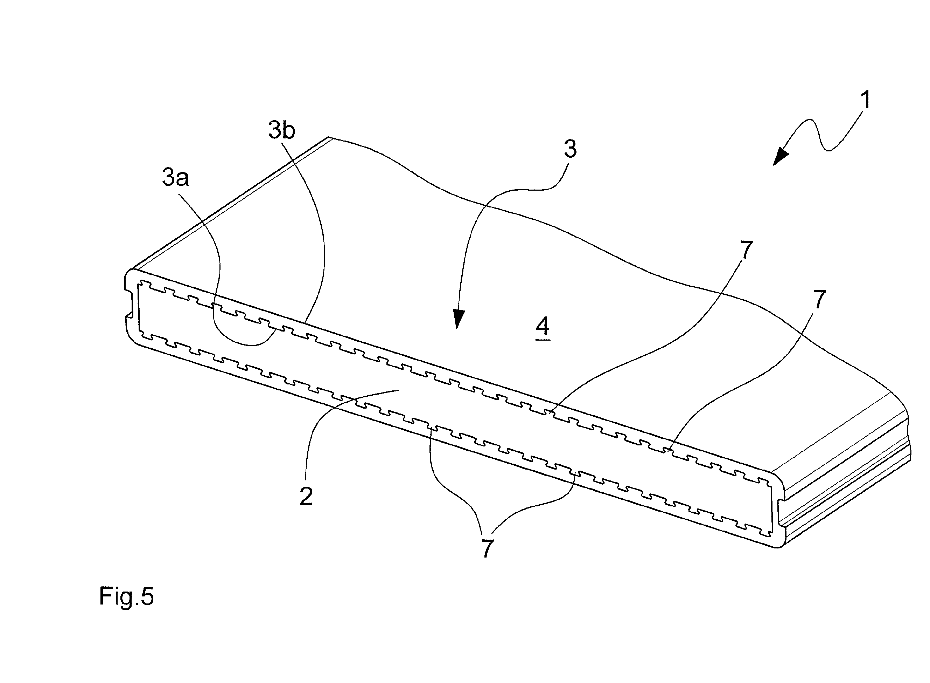

figure 5 is a detail of figure 4.

With reference to the figures of the drawings, a coextruded profiled element according to the present invention is denoted in its entirety by reference number 1 and a coextrusion plant is denoted in its entirety by reference number 10. in general, the same reference number is used for identical or like elements as used in the variant embodiments.

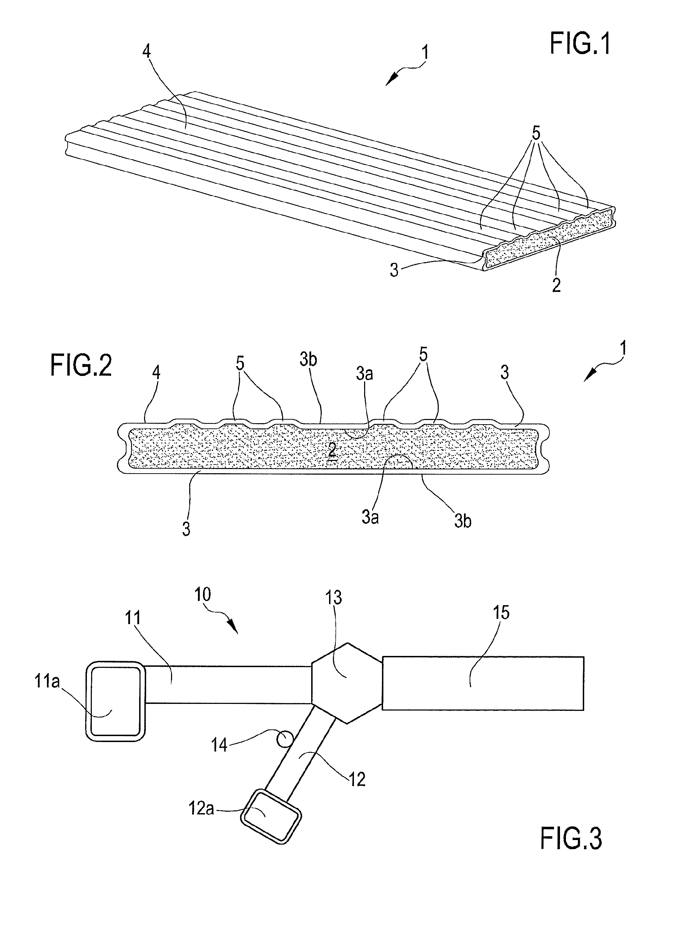

The coextruded profiled element 1 of the present invention, shown by way of example in figures 1 and 2 in the form of a batten of a determined length and longitudinal extension, comprises a core 2 made of a heterogeneous mixture of plastic material and a cladding 2 made of a WPC composite constituted by a mixture of plastic material and wood and cellulose fibres. The cladding is solidly joined to the core by means of a coextrusion operation, in such a way that the cladding externally covers the core. The cladding can adhere to a portion of core, for example only on an upper surface or, as in the figures, it can completely surround the core which is therefore not in contact with the external environment. In the latter case the external surface 4 of the profiled element is entirely composed of cladding material.

As shown by way of example in figure 1 and 2, the cladding 3 is provided with a first side 3a in contact with and coupled to the core 2 of the profiled element, and a second side 3b, opposite the first side and destined to constitute a portion or the whole external surface 4 of the profiled element. The profiled element 1 can have a section, typically constant, full (as in figures 1 and 2) or alternatively hollow or cellular. The profiled element can also exhibit a flat-panelled, undulated or corrugated structure. In the embodiment illustrated in figure 1 and 2, the profiled element exhibits a plurality of longitudinal ribs 5 parallel to one another and to the longitudinal development of the profiled element (in such a way as to form a curved panel); in particular there are three longitudinal ribbings, each constituted by three identical and parallel ribs 5.

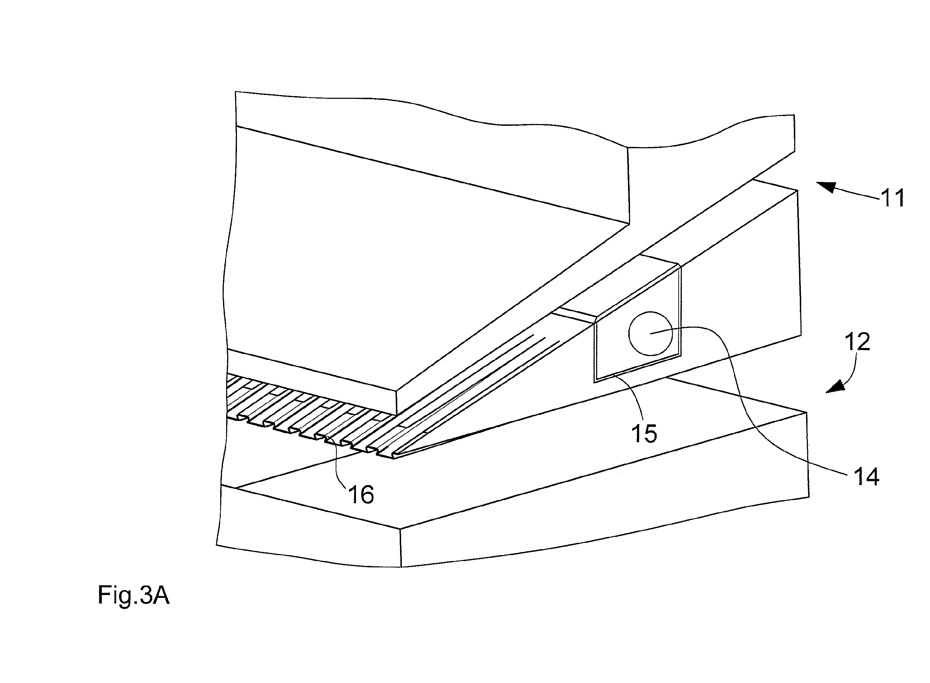

The profiled element 1 is realised by means of a plant 10, schematically illustrated in figure 3, able to implement the method of the present invention. In greater detail, the coextrusion plant 10 comprises at least a first extruder 11 and a second extruder 12, both connected in outlet to a same coextruder die 13.

The method comprises steps of introducing, into the first extruder 11, a quantity of heterogeneous plastic material and to extrude a first flow of a heterogeneous mixture of plastic material; introducing into the second extruder 12 a respective quantity of plastic base material and a respective quantity of wood-cellulose fibres and extruding a second flow of WPC composite material and then directing the first and the second flow into the coextruder 13 such as to couple them solidly to one another and realise the coextruded profiled element 1, where the first and the second flow constitute respectively the core 2 and the cladding 3 of the profiled element; the step of coupling includes realising shapings or heating the material, as will be more fully explained in the following.

In the present invention, the expression "coextrusion" indicates a technological process, known in the sector, which enables combining different materials coming from different extruders and which are joined in a single coextruder (or wire or die or coupling conveyor) which reproduces the section of the profiled element which is to be obtained and which enables uniting in a single product the phases extruded by means of the various upstream extruders.

By the expression "wood-cellulose fibre" are meant, in general, vegetable fibres containing cellulose and/or lignin and other organic composites of vegetable origin.

In the preferred embodiment, the base plastic material is a polymer selected from among polypropylene (PP), high-density polyethylene (PEHD), low-density polyethylene (PELD), poly vinyl chloride (PVC) and the wood-cellulose fibres constitute a mass fraction of the composite material WPC comprised between 10% and 70%. The base composite plastic material preferably constitutes a mass fraction of the WPC composite material that is 40% or more.

The heterogeneous plastic material preferably comprises a mass fraction of PP comprised between 10% and 40%, a mass fraction of PEHD comprised between 10% and 40%, a mass fraction of PELD comprised between 10% and 40% and a mass fraction of about 15% constituted by other polymeric material, again possibly comprising PP, PEHD or PELD.

In particular, the specific heterogeneously recycling material is known as R-POMIX (relating to UNI 10667-16 standard), which derives from the recycling and pretreating of post-use waste classifiable as PLASMIX in the conventions established by the various bodies (for example COREPLA) set up for recycling materials.

In particular, in the recycling process of post-use plastic material the authorized subject is obliged to select the waste from plastic packaging for obtaining the following products:
a) liquid containers in clear PET (Product code SELE-CTL/M);
b) liquid containers in blue tinted PET (Product code SELE-CTA/);
c) liquid containers in coloured PET (Product code SELE-CTC/);
d) liquid containers in PE (Product code SELE-CTE/M);
e) liquid containers in PE (Product code SELE-CTE/T)
f) plastic crates (Product code SELE-CAS/M);
g) packaging film (Product code SELE-FIL/M).

The residual sub-products of the selection operation are thus defined:
h) mixed plastic packaging and others (sub-product code PLASMIX Specific Technical Sub-product enclosure H - see the appendix to the present description).
i) mixed plastic packaging obtained from sifting and preliminary selection (sub-product code PLASMIX-FINE Specific Technical Sub-product enclosure I - see the appendix to the present description).

In general, for the purposes of the present invention, the heterogeneous plastic material mentioned above and the base plastic material can comprise any thermoplastic polymer.

As mentioned, although not limitedly, the heterogeneous plastic material, and possible also the base plastic material, is constituted by mixed post-use plastics sourced from recycling processes. In particular, the plastic material (for example the material known by the commercial name of PLASMIX) used which constitutes the low-quality residue of a selection operation of plastics from waste (known as R-POMIX, see UNI 10667-16 standard). In practice, the selection of plastics, typically of high quality, from tips of plastic waste, leaves quantities of second-class plastics, typically destined for incinerators and no longer used for new manufacturing production cycles. Thus the use of these plastics enables obtaining a reduction in the cost of the co-extruded profiled elements, as the core is constituted by plastics of low quality and therefore low cost, while at the same time the plastics can be easily sourced since the collection of low-quality plastics typically produces large quantities of material. Further, the use of these plastics enables finding a technically and commercially valid use for otherwise-unused materials, and if use (for example by extrusion or moulding) would produce manufactures of low quality, especially in aesthetic terms.

The applicant believes that the possibility of using a wide variety of heterogeneous material derives from the technical features of the disclosed method.

Heterogeneous plastics, in particular the above-mentioned recycling plastics, are available in densified or granular form and contain a multitude of polymers and also non-polymeric parts in smaller percentages (paper, wood, organic substances). The three categories of polymers present in a greater amount are low-density polyethylene, high-density polyethylene and polypropylene, typically in unspecified or only approximately known percentages.

In a first embodiment the method comprises a step of localised heating of the second extruded flow of WPC composite in a point that is preferably immediately upstream of the coextruder die and on a first side of the second flow destined to enter into contact and couple with the core of the profiled element (see figure 3a). This causes a migration of a fraction of wood-cellulose fibres towards a second side of the second flow, opposite the first side and destined to constitute the external surface of the profiled element, and causes an increase in the concentration of plastic base material at the first side.

In this way a second technological problem is solved, relating to the difficulty of adhesion between the layers of coextruded plastic profiled elements. In fact, the base plastic of the WPC of the cladding functions internally of the coextrusion die as a glue between the cladding and the core, differently to the wood-cellular fibres which, in the same conditions, not only do not participate in the joining of the two layers, but tend to degrade; the joining between the cladding and the core depends essentially on the surface which actively participates in the joining of the two layers and therefore depends on the total active quantity present at the interface between the cladding and the core.

The total active quantity is definable as the relation between the surface occupied by the base plastic and the total surface of the interface between the two layers: the closer the quantity is to 1, the higher the fraction of surface which participates actively in the joining of the layers.

One of the main factors which influence the total active quantity, and therefore adhesion between the core and the cladding, is the degree of encapsulation of the wood-cellulose fibres internally of the base plastic of the WPC, which in turn depends on the distribution of the fibres in the flow. In substance, the greater the encapsulation (i.e. the fibres locate in a zone not proximal to the adhesion surface) the greater the probability that the interface between the core and the cladding will bond, as the active component of the join is between polymers. Conversely, if the interface between the core and the cladding is populated by wood-cellulose fibres, the latter make no contribution to the join between the two layers and indeed reduce the contact surface between the active elements (the plastics) of the join.

However, given the high mass percentage (high load) of wood-cellulose fibres in the WPC, and given the dimensions of those fibres, the degree of encapsulation and mixing obtained in the extruder might not be sufficient. During the coupling between the strongly loaded composites with vegetable fibre, the risk of having a considerable quantity of fibre at the join interface of the two layers is very high and consequently this can reduce the degree of adhesion; the total active quantity can take on values that are much lower than the unit and therefore delamination phenomena can take place, with a consequent loss of the mechanical properties of the profiled element overall.

The risk is more evident on consideration that internally of the conveyor channels of the extruder the fluidified composite runs parallel to the walls of the channels and at a greater velocity at the centre that reduces on nearing the walls of the channels. This phenomenon, which happens at microscopic level, determines a non-homogeneous distribution of the wood-cellulose fibres, which tend to locate in positions having a smaller energy content and thus at the outlet walls of the extruder; this means that in the coextruder die the wood-cellulose fibres are arranged more greatly in proximity of the interface of adhesion to the core.

The method of the present invention, especially the step of localised heating of the second extruded flow of WPC composite material, enables this drawback to be obviated. In fact, the localised microheating of the side of the cladding material destined to enter into contact with the core increases the velocity of the material on that side and consequently causes the wood-cellulose fibres to distance from the interface zone. It is firmly believed that the wood-cellulose fibres tend to assume a less energetic condition and consequently migrate towards the opposite side of the WPC composite flow, further away from the interface. This condition is preferably to be sought only in proximity of the interface between the two layers, with the aim of not prejudicing the uniform distribution of the wood-cellulose fibres internally of the base plastic material. The step of heating is done on the second flow 12 and is realised with a heating organ 14, preferably a wire-wound resistor inserted especially close to the contact surface with the interface and insulated in the dispersion of heat by means of a thermal break 15 (in order to concentrate the increase of temperature only where it is useful). See figure 3a for this.

In this regard the presence of a thermal break element 15 can be seen in the figures, interposed between the thermally-controlled zone with an increased temperature and the passage channel of the flow of heterogeneous plastic material which will define the core of the profiled element. The thermal break is necessary for concentrating and localising the increase of temperature only in the zones of interest and preventing a dispersing of the heat into the other zones of the die.

The method further comprises shaping beyond the coupling plane, for example in a dove-tail shape (or similar), of the coupling zone between the two layers (see the larger-scale detail of the shaping 16 of the channels of figure 3a).

In fact the presence of a shaping 7 out of the coupling plane primarily increases the contact surface and thus contributes to a better adhesion of the layers.

Therefore this type of channelling (dovetail) obtained by mechanical working on the two conveyor channels of the two material flows, enables increasing the contract surface between the two layers, in this way increasing the active contact surface given a same total active quantity.

The coextruded profiled element obtained with the method of the present invention is constituted by a core made of a heterogeneous mixture of plastic materal and a cladding made of a WPC composite material constituted by a mixture of a base plastic material and wood-cellular fibres, where the base plastic material is polypropylene, high-density polyethylene, low-density polyethylene, poly vinyl chloride or a combination thereof, and the wood-cellulose fibres constitute a mass fraction of the WPC composite material comprised between 10% and 70%, by way of example about 30%.

Further, the heterogeneous mixture of plastic material comprises: a mass fraction of polypropylene comprised between 10% and 40%; a mass fraction of high-density polyethylene comprised between 10% and 40%; a mass fraction of low-density polyethylene comprised between 10% and 40%; a mass fraction of another polymeric material of about 15%.

The first side 3a of the cladding 3, in contact with and coupled to the core 2 of the profiled element, preferably has a concentration of wood-cellulose fibres that is smaller than the concentration of base plastic material and the second side 3b, opposite the first side and constituting the external surface 4 of the profiled element, has a concentration of wood-cellulose fibres that is greater than the concentration of base plastic material.

In the first side 3a of the cladding the ratio between the surface occupied by the base plastic material and the total interface surface between the cladding and the core is preferably greater than 0.6, more preferably greater than 0.8, still more preferably is about 1, such as to facilitate a homogeneous adhesion between the cladding and the core.

The contact surface between the two flows of material (WPC and heterogeneous material) is preferably increased by means of technological specifications relating to the transport channels (by means of the above-cited mechanical working of the channels such as to create the dove-tail type shaping or the like).

## Claims

1. A method for producing co-extruded profiled elements (1), such as panels, bars, sheets, battens or tubular elements of a desired length, composed of a core (2) made of a heterogeneous mixture of a plastic material and a cladding (3) made of a WPC composite material constituted by a mixture of base plastic material and wood-cellulose fibres, the method comprising steps of:
predisposing respective quantities of heterogeneous plastic material, in particular deriving from recycling processes of post-use plastics, a base plastic material and wood-cellulose fibres;
predisposing a first (11) and a second extruder (12), distinct from one another, and a co-extrusion die (13);
introducing the heterogeneous plastic material into the first extruder (11) and extruding a first flow of the heterogeneous mixture of plastic material;
introducing the base plastic material into the second extruder (12) and the wood-cellulose fibres and
extruding a second flow of the WPC composite material;
feeding the first and second flow into the coextrusion die (13) such as to solidly couple the first and second flows and to realise the coextruded profiled element (1), the first and second flow constituting respectively the core (2) and the cladding (3) of the element,
wherein the base plastic material is selected from a group comprising polypropylene, high-density polyethylene, low-density polyethylene, poly vinyl chloride, and the wood-cellulose fibres constitute a mass fraction of the WPC composite comprised between 10% and 70%,
wherein the heterogeneous plastic material comprises a mass fraction of polypropylene comprised between 10% and 40%, a mass fraction of high-density polyethylene comprised between 10% and40%, a mass fraction of low-density polyethylene comprised between 10% and 40% and a mass fraction of about 15% constituted of another polymer material,
and wherein the step of predisposing the heterogeneous plastic material comprises a step of adding a quantity of additive plastic material to the heterogeneous plastic material, the additive plastic material being of a same type as the base plastic material and being a fraction comprised between 5% and 40% of the total mass of the heterogeneous plastic material, the method further comprising, alternatively to or in combination with, following steps:
during the step of coupling the first and second flow in the coextrusion die for realising the coextruded profiled element, realising shapings which are out of the coupling plane, for increasing the coupling surface between the core (2) and the cladding (3);
localised heating, by means of a heating organ (14), the second extruded flow of the WPC composite material in a point, preferably immediately upstream of the coextrusion die (13) and on a first side of the second flow destined to enter into contact with and couple with the core of the profile, such as to determine a migration of a fraction of wood-cellulose fibres towards a second side of the second flow, opposite the first side and destined to constitute the external surface of the profiled element, and such as to determine an increase in a concentration of the base plastic material at the first side.

2. The method of claim 2, wherein the sub-step of realising shapings out of the coupling plane comprises realising at least an undercut (6), and in particular a plurality of undercuts (6), between the core and the cladding in order to increase the adhesion surface to a maximum.

3. The method of claim 1 or 2, wherein the sub-step of realising shapings out of the coupling plane comprises realising at least a portion having a section comprising a dovetail shaping (7) and preferably a plurality of dovetail shapings that are parallel to one another such as to increase the adhering surface between the core and the cladding.

4. The method of any one of the preceding claims, wherein during the step of predisposing respective quantities of heterogeneous plastic material and base plastic material, the heterogeneous plastic material and/or the base plastic material are constituted by post-use plastics originating from recycling processes, in particular the heterogeneous plastic material containing a percentage, for example up to a maximum of 7%, of solid and non-plastic impurities, such as cellulose and metal materials.

5. A coextruded profiled element (1), in a form of a panel, bar, sheet, batten or tubular element of a desired length, comprising:
a core (2) made of a heterogeneous mixture of plastic material, in particular deriving from recuperation processes of post-use plastic materials;
a cladding (3) made of a WPC composite material constituted by a mixture of a base plastic material and wood-cellulose fibres;
wherein the cladding is solidly joined to the core by means of a coextrusion operation, in such a way that the cladding at least partially externally covers the core,
wherein the base plastic material is selected from a group comprising polypropylene, high-density polyethylene, low-density polyethylene, poly vinyl chloride, and the wood-cellulose fibres constitute a mass fraction of the WPC composite comprised between 10% and 70%,
wherein the heterogeneous plastic material comprises a mass fraction of polypropylene comprised between 10% and 40%, a mass fraction of high-density polyethylene comprised between 10% and 40%, a mass fraction of low-density polyethylene comprised between 10% and 40% and a mass fraction of about 15% constituted by another polymer material,
and wherein the heterogeneous material made of plastic material further comprises an additional quantity of a single additive plastic material of a same type as the base plastic material and being a fraction comprised between 5% and 30% of the total mass of the heterogeneous plastic material and wherein, alternatively or in combination:
a first side (3a) of the cladding, in contact and coupled with the core (2) of the profiled element, has a concentration of wood-cellulose fibres that is smaller than the concentration of base plastic material and wherein a second side (3b) of the cladding, opposite the first side and destined to constitute an external surface (4) of the profiled element, has a concentration of wood-cellulose fibres that is greater than the concentration of base plastic material; and
a first side (3a) of the cladding, in contact and coupled with the core (2) of the profiled element, comprises a predetermined number of shapings out of the coupling plane in order to increase the coupling surface between the core (2) and the cladding (3).

6. The profiled element (1) of claim 5, wherein the shapings out of the coupling plane comprise at least an undercut (6), and in particular a plurality of undercuts (6), between the core and the cladding and still more in particular the shapings out of the coupling plane comprise at least a portion of section having a dovetail shaping (7) and preferably a plurality of dovetail shapings that are parallel to one another.
